Europäisches Patentamt

European Patent Office

Office européen des brevets

(19)

(11) Numéro de publication : **0 349 421 B1**

(12) **FASCICULE DE BREVET EUROPEEN**

(45) Date de publication du fascicule du brevet :
**15.04.92 Bulletin 92/16**

(21) Numéro de dépôt : **89401842.3**

(22) Date de dépôt : **28.06.89**

(51) Int. Cl.⁵ : **F02C 7/20,** F02C 6/08,
F01D 11/00, F02C 7/28,
F02C 7/32

(54) Dispositif de prélèvement d'air dans la veine secondaire d'un turboréacteur.

(30) Priorité : **30.06.88 FR 8808802**

(43) Date de publication de la demande :
**03.01.90 Bulletin 90/01**

(45) Mention de la délivrance du brevet :
**15.04.92 Bulletin 92/16**

(84) Etats contractants désignés :
**DE FR GB**

(56) Documents cités :
**FR-A- 2 316 443**
**GB-A- 2 013 786**
**US-A- 3 777 489**
**US-A- 4 044 973**
**US-A- 4 155 680**
**US-A- 4 712 370**

(73) Titulaire : **SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)**

(72) Inventeur : **Lefort, Bernard
46, rue C. Gallon
F-77310 Ponthierry (FR)**
Inventeur : **Maulat, Jean-Pierre
21, rue de la Réunion
F-94100 - Saint Mau (FR)**
Inventeur : **Pachomoff, Guy, Robert
16, chemin des Longaines
F-91100 - Corbeil-Essonnes (FR)**

(74) Mandataire : **Berrou, Paul et al
S.N.E.C.M.A. Service des Brevets Boîte
Postale 81
F-91003 Evry Cedex (FR)**

## Description

La présente invention concerne le domaine des prélèvements d'air effectués sur le flux secondaire des turbomachines aéronautiques.

Il est courant sur un turboréacteur d'effectuer des prélèvements d'air sur le flux secondaire ou sur le flux primaire, l'air sous pression prélevé étant destiné à l'entraînement des équipements avion ou au conditionnement d'air de la cabine.

Un tel prélèvement est montré par exemple par le document US-A-4 044 973 dans lequel des tubes de prélèvement d'air sur le flux primaire traversent les capotages intermédiaire et externe du flux secondaire au travers du mât de support du moteur.

Le problème que pose ce genre de prélèvements réside dans le fait que toutes les tubulures qui traversent les carters fragilisent d'autant ces carters et il est nécessaire d'en réduire le nombre au minimum.

C'est un but de la présente invention que de réaliser une structure de prélèvement d'air dans le flux secondaire qui ne nécessite pas de réaliser un perçage supplémentaire du carter, propre à la tubulure de prélèvement.

Pour ce faire selon l'invention, on réalise le prélèvement d'air au travers de la structure de suspension arrière du turboréacteur selon un mode de réalisation qui va être décrit ci-après.

Un autre problème que soulèvent habituellement les tubes de prélèvement d'air provient de ce que les tubes reçoivent toutes les vibrations des carters qu'ils traversent et les transmettent aux organes de l'avion auxquels ils sont reliés.

Ce problème est largement atténué, voire supprimé au moyen de l'invention dans laquelle le tube de prélèvement traverse le carter secondaire au centre de la structure de suspension montée de façon flottante dans un puits dudit carter.

Ainsi, selon l'invention, un dispositif de prélèvement d'air dans le flux secondaire d'un turboréacteur double flux, dont la suspension arrière du turboréacteur est réalisée au moyen d'une structure de suspension, fixée extérieurement du turboréacteur pour le supporter, et fixée intérieurement sur le carter principal, la structure ainsi traversant le carter secondaire, et une platine faisant partie de ladite structure assurant l'étanchéité du carter secondaire, caractérisé en ce que l'orifice d'entée du tube de prélèvement est solidaire de ladite platine et coïncide avec une ouverture de cette platine.

En outre, la platine est montée flottante dans une découpe du carter secondaire.

D'autres caractéristiques seront précisées dans le complément de description qui va suivre en regard des planches annexées parmi lesquelles :

– la figure 1 est une vue schématisée en coupe d'un turboréacteur double flux comportant un moyen de prélèvement d'air dans le flux secondaire tel que prévu dans l'invention ;

– la figure 2 est une coupe à plus grande échelle de la platine de suspension et de prélèvement d'air selon l'invention en coupe AA de la figure 1 ;

– la figure 3 est une vue du dispositif suivant la flèche F de la figure 2 ;

– la figure 4 est une section du dispositif dans le plan B des figures 2 et 3.

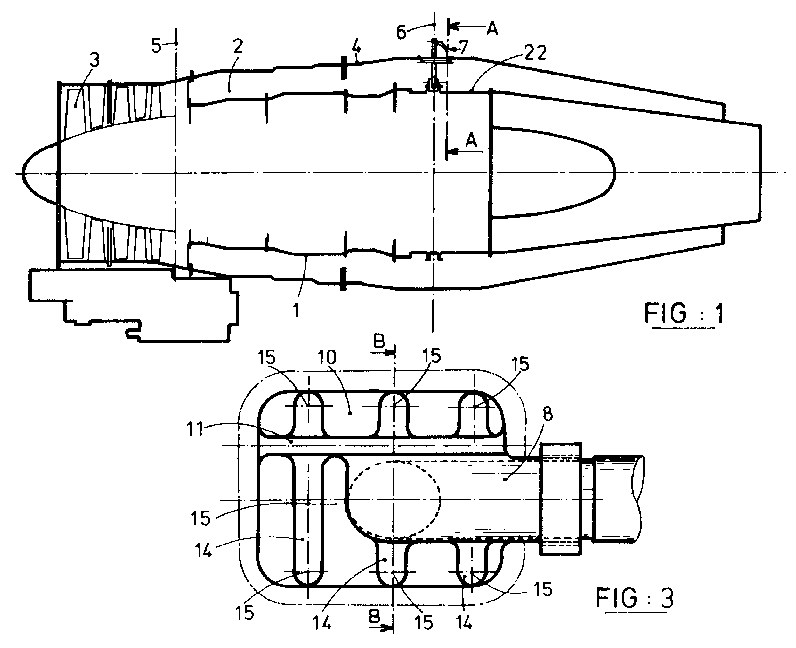

Sur la figure 1 a été schématisée la coupe d'un turboréacteur double flux. La veine primaire contenue à l'intérieur du carter principal 1 n'est pas représentée en détail. La veine secondaire 2, en aval du compresseur basse pression 3 entoure la veine principale entre le carter principal et le carter secondaire 4. Le moteur est suspendu à la structure de l'avion par des organes de suspension disposés dans deux plans, l'un avant 5, et l'autre arrière 6.

Pour assurer les servitudes pneumatiques de l'avion et/ou la pressurisation de la cabine ou du poste de pilotage, un prélèvement d'air comprimé froid est effectué dans la veine secondaire, au niveau du plan de suspension arrière. Plutôt que de fragiliser le carter secondaire en créant une ouverture spécifique supplémentaire pour le tube de prélèvement d'air on utilise selon l'invention la structure de suspension arrière 7, fixée extérieurement sur l'avion et intérieurement sur le carter principal au moyen de biellettes, pour y loger l'orifice d'entrée 8 du tube de prélèvement 9.

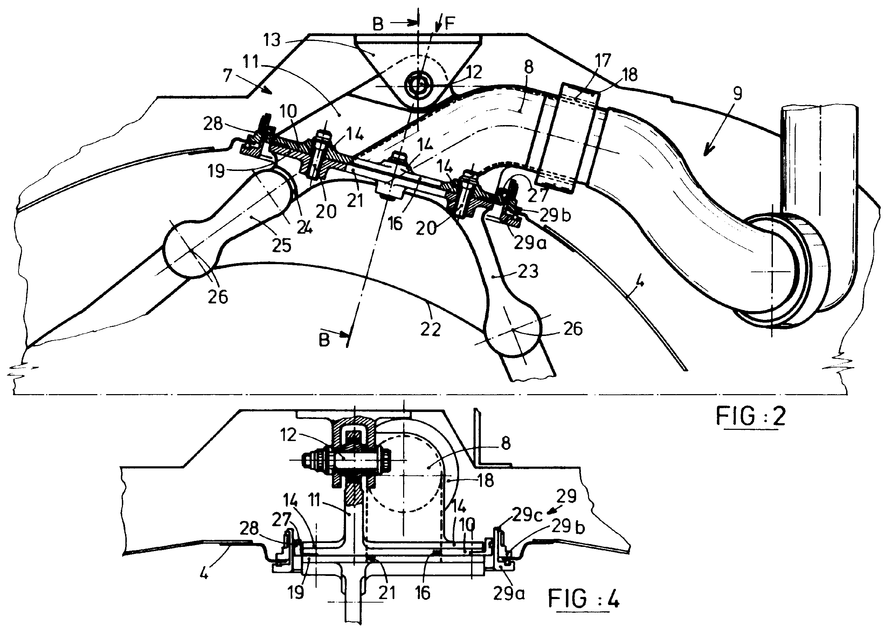

Ainsi, si on regarde la figure 2, la structure de suspension arrière 7 est constituée d'une plaque externe 10 comportant une chape ou oreille externe 11 radiale pour la suspension du moteur au moyen d'un axe à rotule 12 sur une chape 13 de la structure de l'avion.

La plaque externe comporte extérieurement trois bossages transversaux 14 de part et d'autre de la chape 11, soit au total six bossages percés de trous 15 débouchants qui permettent la fixation de la plaque externe sur une plaque interne.

Tangentiellement à la chape externe 11 et venu de moulage avec le reste de la plaque externe est disposé l'orifice d'entrée 8 du tube de prélèvement 9, débouchant dans une lumière centrale 16 de la partie plane de la plaque 10. L'orifice d'entrée 8 est coudé et son extrémité libre est filetée extérieurement en 17 pour recevoir une bague de fixation 18 du tube souple de prélèvement 9.

Sous la plaque externe 10 est vissée une plaque interne 19 au moyen de vis 20 disposées dans des trous taraudés en regard des trous 15 de la plaque externe.

La plaque interne comporte une ouverture circulaire 21 faisant face à la lumière 16 de la plaque externe pour assurer le prélèvement d'air dans le canal secondaire.

La plaque interne comporte également deux points d'ancrage pour le carter d'échappement 22 situé dans le prolongement du carter principal 1. Ces deux points sont constitués par une biellette fixe 23 monobloc venue de fonderie avec la plaque interne et par une chape 24 recevant une biellette articulée 25, les deux biellettes permettent la fixation en deux points 26 du carter 22.

L'ensemble plaque externe 10 plaque interne 19 forme la platine de suspension arrière du turboréacteur. Celle-ci comporte une pièce d'étanchéité annulaire formée d'un anneau 27 à section en L. La base plane de l'anneau 27 est emprisonnée entre les plaques externe et interne de la platine tandis que sa branche latérale comporte sur sa face extérieure un joint d'étanchéité 28. La pièce d'étanchéité 27 peut coulisser dans un puits radial 29 formé de deux pièces annulaires, elles-mêmes à section en forme de L, l'une 29a portant par la face externe de sa base sur l'intérieur de la découpe du carter secondaire 4 et traversant ladite découpe tandis que l'autre pièce 29b est en appui par la face interne de sa base sur le bord extérieur de la découpe du carter 4. La pièce 29b entoure la partie radiale de la pièce 29a. Cette dernière est ensuite repliée en collet rabattu 29c sur la pièce 29b sur laquelle elle est brasée.

La structure de prélèvement et de suspension ainsi réalisée est donc montée de telle sorte que le carter secondaire 4 est flottant sur la platine 10 - 19. De la sorte les vibrations éventuelles que le carter peut supporter ne sont pas transmises à la platine ni au tube de prélèvement d'air.

## Revendications

1. Dispositif de prélèvement d'air dans le flux secondaire d'un turboréacteur double flux, dont la suspension arrière du turboréacteur est réalisée au moyen d'une structure de suspension (7), fixée extérieurement du turboréacteur pour le supporter, et fixée intérieurement sur le carter principal (1), la structure (7) ainsi traversant le carter secondaire (4), et une platine (10, 19) faisant partie de ladite structure (7) assurant l'étanchéité du carter secondaire (4), caractérisé en ce que l'orifice d'entrée (8) du tube de prélèvement (9) est solidaire de ladite platine (10, 19) et coïncide avec une ouverture (16, 21) de cette platine (10, 19).

2. Dispositif de prélèvement d'air selon la revendication 1 caractérisé en ce que ladite platine est montée flottante dans une découpe du carter secondaire (4).

3. Dispositif selon la revendication 2, caractérisé en ce que la platine est constituée d'une plaque externe (10) comportant une oreille externe (11) de suspension du turboréacteur sur la structure de l'avion et percée d'une lumière centrale (16) dans laquelle débouche l'orifice d'entrée (8) du tube de prélèvement (9), et d'une plaque interne (19) sur laquelle est vissée la plaque externe, ladite plaque interne (19) comportant une ouverture (21) en regard de la lumière centrale (16) et deux points d'ancrage (26) sur le carter d'échappement (22).

4. Dispositif selon la revendication 3 caractérisé en ce que les deux points d'ancrage de la plaque interne sont constitués par une biellette (23) monobloc avec la plaque interne (19) et d'une chape interne (24) recevant une biellette mobile (25), toutes deux fixées sur le carter d'échappement (22).

5. Dispositif selon l'une des revendications 3 ou 4 caractérisé en ce que la platine est apte à coulisser dans un puits radial (29) interne à la découpe du carter secondaire (4) au moyen d'une pièce annulaire d'étanchéité (27).

6. Dispositif selon la revendication 5 caractérisé en ce que la pièce d'étanchéité (27) comporte un anneau à section en L dont la face externe radiale coulissant dans le puits (29) du carter secondaire comporte un joint d'étanchéité annulaire (28) et dont la face plane est emprisonnée entre les plaques externe (10) et interne (19) de la platine.

7. Dispositif selon l'une des revendications 5 ou 6, caractérisé en ce que le puits radial (29) est constitué de deux pièces annulaires à section en L serties entre elles, l'une (29a) portant sur le bord interne du carter secondaire et traversant la découpe dudit carter et l'autre (29b) sur le bord externe dudit carter, les deux pièces (29a et 29b) étant serties entre-elles.

## Patentansprüche

1. Vorrichtung zur Entnahme von Luft aus dem Sekundärstrom eines Zweikreis-Strahltriebwerks, dessen hintere Triebwerkaufhängung durch eine Aufhängungskonstruktion (7) realisiert ist, die ausserhalb des Triebwerks befestigt ist, um dieses zu halten, und innen an dem Hauptgehäuse (1) befestigt ist und so das Sekundärgehäuse (4) durchdringt, und wobei eine Platine (10, 19), die Bestandteil der genannten Aufhängungskonstruktion (7) ist, die Dichtigkeit des Sekundärgehäuses (4) gewährleistet, dadurch gekennzeichnet, daß die Einlaßöffnung (8) des Entnahmerohrs (9) mit der genannten Platine (10) fest verbunden ist und mit einer Öffnung (16, 21) der Platine (10) zusammenfällt.

2. Vorrichtung zur Entnahme von Luft nach Anspruch 1, dadurch gekennzeichnet, daß die Platine in einem Ausschnitt des Sekundärgehäuses (4) schwimmend montiert ist.

3. Vorrichtung nach Anspruch 2, dadurch gekennzeichnet, daß die Platine aus einer äußeren Platte (10) besteht mit einer äußeren Öse (11) zur Aufhängung des Triebwerks an der Flugzeugkonstruktion, wobei diese äußere Platte von einer zentralen Öffnung (16) durchbrochen ist, in der die Einlaßöffnung (8) des Entnahmerohrs (9) mündet, und daß die Platine weiterhin eine innere Platte (19) umfaßt, die auf die äußere Platte aufgeschraubt ist und eine der zentralen Öffnung (16) gegenüberliegende Öffnung (21) sowie zwei Verankerungspunkte (26) zur Verankerung an dem Auslaßgehäuse (22) aufweist.

4. Vorrichtung nach Anspruch 3, dadurch gekennzeichnet, daß die beiden Verankerungspunkte der inneren Platte aus einem einstükkig mit der inneren Platte (19) ausgebildeten Schwingarm (23) und einem einen beweglichen Schwingarm (25) aufnehmenden inneren Gabelteil (24) bestehen, die beide an dem Auslaßgehäuse (22) befestigt sind.

5. Vorrichtung nach Anspruch 3 oder 4, dadurch gekennzeichnet, daß die Platine mit Hilfe eines ringförmigen Dichtungsteils (27) in einem radialen Schacht (29) im Innern der Ausnehmung des Sekundärgehäuses (4) gleiten kann.

6. Vorrichtung nach Anspruch 5, dadurch gekennzeichnet, daß das Dichtungsteil (27) einen Ring mit L-förmigem Querschnitt umfaßt, dessen in dem Schacht (29) des Sekundärgehäuses gleitende radiale Außenseite eine ringförmige Dichtung (28) besitzt und dessen ebene Seite zwischen der äußeren und der inneren Platte (10 bzw. 19) der Platine gefaßt ist.

7. Vorrichtung nach einem der Ansprüche 5 oder 6, dadurch gekennzeichnet, daß der radiale Schacht (29) aus zwei ringförmigen Teilen mit L-förmigen Querschnitt besteht, die durch eine Bördelung miteinander verbunden sind, wobei eines (29a) dieser Teile an dem Innenrand des Sekundärgehäuses anliegt und die Ausnehmung desselben durchdringt und das andere Teil (29b) an dem Außenrand des Gehäuses anliegt, und wobei die beiden Teile (29a und 29b) durch Bördelung miteinander verbunden sind.

## Claims

1. Device for drawing off air from the secondary airflow of a bypass turbojet engine, of which the suspension of the turbojet engine at the rear is achieved by means of a suspension structure (7) fixed outside the turbojet engine in order to support it and fixed internally to the main casing (1), the structure (7) thus passing through the secondary casing (4) and a suspension plate (10,19) forming part of the said structure (7) ensuring the sealing of the secondary casing (4), characterised in that the inlet (8) of the draw-off pipe (9) forms an integral part of the said suspension plate (10, 19) and coincides with an opening (16, 21) in this suspension plate (10, 19).

2. Device for drawing off air in accordance with Claim 1, characterised in that the said suspension plate is mounted so as to float in a cut-out in the secondary casing (4).

3. Device in accordance with Claim 2, characterised in that the suspension plate is made up of an outer plate (10) comprising an external lug (11) for suspending the turbojet engine from the aircraft structure, and pierced with a central opening (16) into which opens the inlet orifice (8) of the draw-off pipe (9) and an inner plate (19) to which the outer plate is bolted, the said inner plate (19) comprising an opening (21) opposite the central opening (16) and two anchoring points (26) on the ejector casing (22).

4. Device in accordance with Claim 3, characterised in that the two anchoring points of the inner plate are made up of a link (23) formed in one piece with the inner plate (19) and an inner bracket (24) receiving a movable link (25), both fixed to the ejector casing (22).

5. Device in accordance with either of Claims 3 or 4 characterised in that the suspension plate is capable of sliding in a radial recess (29) internal in relation to the cut-out in the secondary casing (4), by means of an annular sealing component (27).

6. Device in accordance with Claim 5, characterised in that the sealing component (27) comprises a ring of L-shaped section of which the radially outer face sliding in the recess (29) of the secondary casing comprises an annular seal (28) and of which the flat face is clamped between the outer (10) and inner (9) plates of the suspension plate.

7. Device in accordance with either of Claims 5 or 6, characterised in that the radial recess (29) is made up of two annular parts of L-shaped section crimped together, one (29a) bearing against the inner edge of the secondary casing and the other (29b) bearing on the outer edge of the said casing, the two parts (29a and 29b) being crimped together.

FIG : 1

FIG : 3

FIG:2

FIG:4